# EUROPÄISCHE PATENTSCHRIFT

(11) **EP 1 527 107 B1**
(45) Veröffentlichungstag und Bekanntmachung des Hinweises auf die Patenterteilung: **13.06.2007**
(21) Anmeldenummer: 03762565.4
(22) Anmeldetag: 01.07.2003
(51) Int. Cl.: C08F 8/28

(54) **VERNETZTE POLYVINYLACETALE**
CROSSLINKED POLYVINYL ACETALS
POLYVINYLACETALS RETICULES

(30) Priorität: 29.04.2003 DE 10230572; 04.07.2002 DE 10230251
(43) Veröffentlichungstag der Anmeldung: 04.05.2005
(73) Patentinhaber: Kuraray Europe GmbH, 65926 Frankfurt am Main (DE)
(72) Erfinder: PAPENFUHS, Bernd, 63179 Obertshausen (DE); STEUER, Martin, 65853 Liederbach (DE); JONAS, Simon, 65795 Hattersheim (DE)
(74) Vertreter: Kisters, Michael Marcus
(86) Internationale Anmeldenummer: PCT/EP2003/006973
(87) Internationale Veröffentlichungsnummer: WO 2004/005358

(56) Entgegenhaltungen:
- EP-A- 0 174 479
- EP-A- 1 180 528
- EP-A- 1 180 529
- WO-A-01/79305
- US-A- 2 332 899
- US-A- 2 882 161

## Beschreibung

Die vorliegende Erfindung betrifft neue, vernetzte Polyvinylacetale, Verfahren zu deren Herstellung sowie deren Verwendung.

Bekannt ist, Polyvinylacetale, insbesondere Polyvinylbutyrale zusammen mit Weichmachern durch Extrusion zu Folien zu verarbeiten, die insbesondere in Verbundsicherheitsgläsern eingesetzt werden.

Zur Erhöhung des Molekulargewichtes solcher Polyvinylbutyrale wird in der EP-A-0 211 818 vorgeschlagen, sie durch stabile, intermolekulare Diacetalverknüpfungen, zu vernetzen. Die Vernetzung erfolgt dabei durch Aldehyde mit mindestens zwei Aldehydgruppen. Das Vernetzungsmittel wird dabei vor oder während der Acetalisierung der Polyvinylalkohole mit Butyraldehyd zugegeben.

Die Vernetzung von Polyvinylbutyralen mit Dialdehyden führt jedoch aufgrund der hohen Reaktivität der Aldehyde zu stark vernetzten, sehr hochmolekularen und daher teilweise unlöslichen Polyvinylbutyralen. Darüber hinaus ist die Vernetzungsreaktion aufgrund der geringen Selektivität nur schwer kontrollierbar; wodurch die Herstellung reproduzierbarer Produktqualitäten sehr schwierig ist.

In der DE-A-100 18 517 wird vorgeschlagen, Diester, insbesondere der Oxalsäure, für die Vernetzung von Polyvinylbutyralen einzusetzen. Auf diese Weise können höhermolekulare Produkte mit sehr guter Reproduzierbarkeit hergestellt werden. Nachteilig ist jedoch die Notwendigkeit, dass das Vernetzungsreagenz als Additiv vor der Folienextrusion zugegeben werden muss. Hierdurch ergeben sich wegen der Zweiphasigkeit des Systems Homogenisierungsprobleme, die eine effektive Vormischung als zusätzlichen Verfahrensschritt erforderlich machen. Außerdem bedeutet die Notwendigkeit der Zugabe eines Vernetzers eine mögliche Fehlerquelle für den Folien-Hersteller, da Wäge- und Dosierfehler nie völlig auszuschließen sind. Ein weiterer Nachteil ist die Freisetzung von bei der Umesterung entstehenden niedermolekularen Alkoholen, die unter Umständen zu höheren, betrieblichen Sicherheitsauflagen führen können.

Ferner ist bekannt, Polyvinylbutyrale in Beschichtungsanwendungen durch Vernetzungsreagenzien zu vernetzen, deren funktionelle Gruppen mit den OH-Gruppen des Polyvinylbutyrals chemische Bindungen eingehen können. Beispiele für derartige Vernetzungsreagenzien sind Phenol-Formaldehydharze, polyfunktionelle Aldehyde, polyfunktionelle Epoxide, Epoxidharze, Melaminharze und polyfunktionelle Isocyanate. Eine Übersicht über Verbindungen, die zur Vernetzung von Polyvinylbutyralen eingesetzt werden können, gibt z.B. die Produktbroschüre "Mowital", Ausgabe August 1997, der Clariant GmbH. Nachteilig ist auch hier die Notwendigkeit der Zugabe eines Vernetzers. Nachteilig ist darüber hinaus, dass Polyvinylbutyral nicht mit allen Vernetzungsreagenzien verträglich ist, wodurch deren Einsatzmöglichkeiten eingeschränkt sind.

In der nicht-vorveröffentlichten DE 10143190 wird beschrieben, dass sich Polyvinylbutyrale, die geringe Mengen coacetalisierter, säurefunktionalisierter Aldehyde enthalten, thermisch vernetzen lassen, ohne dass es des Zusatzes separater Vernetzungsmittel bedarf.

Nachteilig an diesen selbstvernetzenden Polymeren ist jedoch, dass zu deren Herstellung eine weitere Komponente zugegeben werden muss (Möglichkeit von Wäge- und/oder Dosierfehlern). Außerdem sind die bevorzugten säurefunktionalisierten Aldehyde gegenüber Butyraldehyd relativ teuer und weisen eine erheblich verminderte Reaktivität auf. Dies bedingt zwangsläufig schlechtere Raum/Zeit-Ausbeuten (längere Kesselbelegzeiten), höhere Energiekosten und eine stärkere Umwelt- bzw. Kläranlagenbelastung (höhere CSB-Werte des Abwassers bedingen höhere Abgaben an den Kläranlagen-Betreiber).

Der vorliegenden Erfindung lag somit die Aufgabe zugrunde, vorzugsweise hochmolekulare, Polyvinylacetale, insbesondere Polyvinylbutyrale, zur Verfügung zu stellen, die sich unter hoher Reproduzierbarkeit und ohne Zusatz eines separaten Vernetzungsreagenzes bzw. weiterer Acetalisierungs-Komponenten herstellen lassen und sich für die Erzeugung von Produkten, wie z.B. Folien und Beschichtungen, insbesondere Verbundglasscheiben, hervorragend eignen. Dabei sollten die erfindungsgemäßen Polyvinylacetale nicht die vorstehend beschriebenen Nachteile aufweisen.

Es wurde nun gefunden, dass sich Polyvinylacetale, insbesondere Polyvinylbutyrale, die direkt an der Polymer-Kette (Backbone) gebundene Carboxylgruppen enthalten, bei relativ niedrigen Temperaturen thermisch vernetzen lassen. Dieses Ergebnis ist insofern sehr überraschend als sich die Polymer-Ketten für die zur Vernetzung führende Veresterungs-Reaktion räumlich sehr nahe kommen müssen, was wegen des hohen Platzbedarfs der ringförmigen Acetal-Fragmente einer starken sterischen Behinderung unterliegt.

Gegenstand der vorliegenden Erfindung ist somit ein vernetztes Polyvinylacetal, das aus mindestens einem Polyvinylacetal (I) erhältlich ist,
welches durch Umsetzung mindestens eines Polymers (A), das
a.) 1,0 bis 99,9 Gew.-% Struktureinheiten der Formel (1) 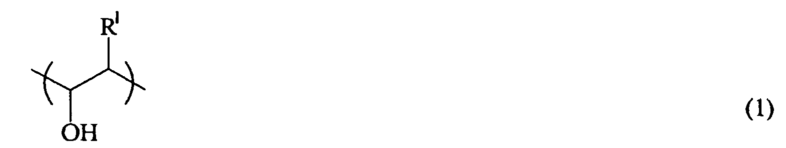
b.) 0 bis 99,0 Gew.-% Struktureinheiten der Formel (2) 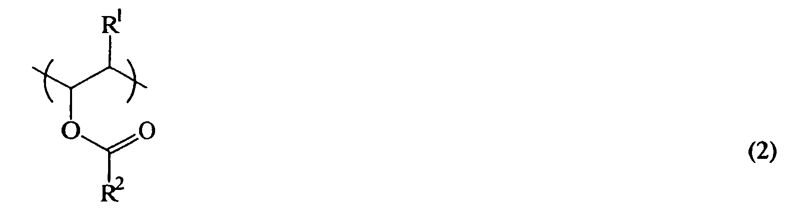
c.) 0 bis 70,0 Gew.-% Struktureinheiten der Formel (3) 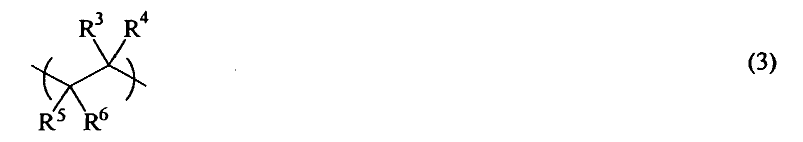
d.) 0,1 bis 30,0 Gew.-% Struktureinheiten der Formel (4) 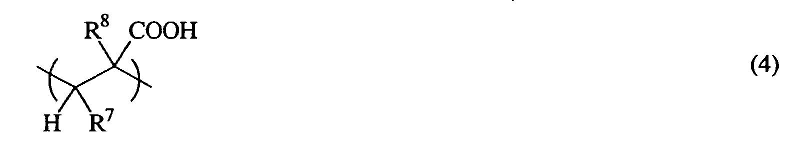
jeweils bezogen auf das Gesamtgewicht des Polymers (A) enthält,
mit mindestens einer Verbindung (B) der Formel (5) erhältlich ist, 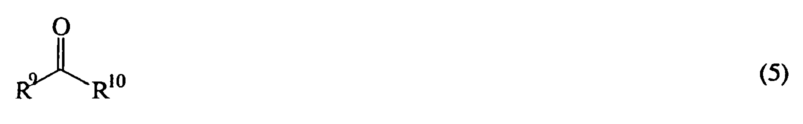 indem man zumindest teilweise Gruppen der Formel (1) und der Formel (4) miteinander verestert.

Dabei sind die jeweiligen Struktureinheiten natürlich voneinander verschieden, insbesondere umfasst die Struktureinheit der allgemeinen Formel (3) nicht die Struktureinheiten der allgemeinen Formel (1), (2) und/oder (4).

Der Rest R¹ stellt jeweils unabhängig voneinander Wasserstoff oder Methyl, vorzugsweise Wasserstoff dar.

Der Rest R² kennzeichnet Wasserstoff oder einen Alkylrest mit 1 bis 6 Kohlenstoffatomen, vorzugsweise einen Alkylrest mit 1 bis 6 Kohlenstoffatomen, zweckmäßigerweise eine Methyl-, Ethyl-, n-Propyl-, iso-Propyl-, n-Butyl-, sec-Butyl-, tert-Butyl-, n-Pentyl- oder eine n-Hexylgruppe, vorteilhafterweise eine Methyl- oder eine Ethylgruppe, insbesondere eine Methylgruppe.

Die Reste R³, R⁴, R⁵ und R⁶ sind jeweils unabhängig voneinander Reste mit einem Molekulargewicht im Bereich von 1 bis 500 g/mol, zweckmäßigerweise Wasserstoff, ein gegebenenfalls verzweigter, aliphatischer oder cycloaliphatischer Rest mit 1 bis 16 Kohlenstoffatomen, der gegebenenfalls eine oder mehrere Carbonsäureester-, Carbonsäureamid- und/oder Sulfonsäuregruppen enthalten kann.

Besonders bevorzugte Struktureinheiten der Formel (3) leiten sich von geradkettigen oder verzweigten Olefinen mit 2 bis 18 Kohlenstoffatomen, (Meth)acrylamiden und/oder Ethylensulfonsäure ab. Dabei haben sich Olefine, insbesondere solche mit einer endständigen C-C-Doppelbindung, die vorzugsweise 2 bis 6 Kohlenstoffatome aufweisen, insbesondere Ethylen. als ganz besonders günstig erwiesen. Weiterhin führen auch Struktureinheiten (3), die sich von Acrylamidopropenylsulfonsäure (AMPS) ableiten, erfindungsgemäß zu ganz besonders vorteilhaften Ergebnissen.

Der Rest R⁷ ist Wasserstoff, eine Carboxylgruppe (COOH) oder eine Alkylgruppe mit 1 bis 10 Kohlenstoffatomen, zweckmäßigerweise Wasserstoff oder eine Methyl-, Ethyl-, n-Propyl-, iso-Propyl-, n-Butyl-, sec-Butyl-, tert-Butyl-, n-Pentyl- oder eine n-Hexylgruppe, die gegebenenfalls eine oder mehrere COOH-Gruppen als Substituent aufweisen kann..

Der Rest R⁸ bezeichnet Wasserstoff, eine Carboxylgruppe oder eine Alkylgruppe mit 1 bis 10 Kohlenstoffatomen, zweckmäßigerweise Wasserstoff oder eine Methyl-, Ethyl-, n-Propyl-, iso-Propyl-, n-Butyl-, sec-Butyl-, tert-Butyl-, n-Pentyl- oder eine n-Hexylgruppe, die gegebenenfalls eine oder mehrere COOH-Gruppen als Substituent aufweisen kann. Besonders bevorzugte Reste R⁸ umfassen Wasserstoff, eine Methylgruppe und -CH₂COOH.

Die Reste R⁹ und R¹⁰ sind jeweils unabhängig voneinander Wasserstoff, COOH, eine Alkylgruppe mit 1 bis 10 Kohlenstoffatomen oder eine Arylgruppe mit 6 bis 12 Kohlenstoffatomen. Dabei können diese Alkyl- und Arylreste mit einer oder mehreren Carboxyl-, Hydroxyl-, Sulfonsäuregruppen und/oder Halogenatomen, wie Fluor, Chlor, Brom, Iod, substituiert sein. Zu den bevorzugten Verbindungen (B) gehören Formaldehyd, Acetaldehyd, Propionaldehyd, n-Butyraldehyd, iso-Butyraldehyd, 2-Ethoxybutyraldehyd, Paraldehyd, 1,3,5-Trioxan, Capronaldehyd, 2-Ethylhexanal, Pelargonaldehyd, 3,5,5-Trimethylhexanal, 2-Formyl-benzoesulfonsäure, Aceton, Ethylmethylketon, Butylethylketon und/oder Ethylhexylketon. Gemäß einer weiteren bevorzugten Ausführungsform wird Glyoxylsäure HCO-COOH als Verbindung (B) verwendet.

Im Rahmen der vorliegenden Erfindung hat sich der Einsatz von Aldehyden, d. h. von Verbindungen der Formel (5) mit R⁹ = Wasserstoff und R¹⁰ = Wasserstoff, eine Methyl-, Ethyl-, n-Propyl- oder eine iso-Propylgruppe, vorzugsweise von Formaldehyd und/oder n-Butyraldehyd, insbesondere von n-Butyraldehyd, ganz besonders bewährt.

Die Gesamtanzahl an Struktureinheiten der Formel (2) ist vorzugsweise im Bereich von 0,01 bis 40 mol-%, zweckmäßigerweise im Bereich von 0,1 bis 25,0 mol-%, insbesondere im Bereich von 0,5 bis 15,0 mol-%, jeweils bezogen auf die Gesamtanzahl an Struktureinheiten der Formel (1) und (2). Dabei wird gemäß einer bevorzugten Ausführungsform der vorliegenden Erfindung ein Polymer (A) einsetzt, welches bezogen auf die Gesamtanzahl an Struktureinheiten der Formel (1) und (2) 0,5 bis 2,5 mol-% Struktureinheiten der Formel (2) enthält.

Im Rahmen der vorliegenden Erfindung kann das Polymer (A) einen syndiotaktischen, isotaktischen und/oder ataktischen Kettenaufbau besitzen. Weiterhin kann es sowohl als random- als auch als Blockcopolymer vorliegen.

Die Viskosität des Polymers (A) ist erfindungsgemäß von untergeordneter Bedeutung, prinzipiell können sowohl niedermolekulare als auch hochmolekulare Polymere (A) eingesetzt werden. Dennoch hat es sich im Rahmen der vorliegenden Erfindung als ganz besonders günstig erwiesen, dass das Polymer (A) eine Viskosität im Bereich von 1 bis 70 mPas, vorzugsweise im Bereich von 2 bis 40 mPas, zweckmäßigerweise im Bereich von 2,5 bis 35 mPas, insbesondere im Bereich von 3 bis 30 mPas, aufweist (gemessen als 4 Gew.-%-ige wässrige Lösung nach Höppler bei 20°C, DIN 53015).

Die Herstellung dieser als Rohstoffe eingesetzten Polyvinylacetale (I) ist bekannt und wird zum Beispiel in der DE 10011096 für andere Anwendungen beschrieben.

Die erfindungsgemäßen, vernetzten Polyvinylacetale weisen somit die folgende Struktureinheit auf:

P - O - C(O) - P'

in der P und P' gleiche oder verschiedene Polyvinylacetal-Fragmente darstellen, die weitere gebundene Carbonsäure-Gruppen enthalten können.

Als Ausgangsmaterialien können alle dem Fachmann bekannten Polyvinylacetale (I) eingesetzt werden, die direkt an der Polymer-Kette gebundene Carboxylgruppen enthalten. Die für deren Synthese verwendeten Carboxylgruppen-haltigen Polyvinylalkohole sind in großtechnischen Mengen verfügbare Produkte, die in der Regel durch Copolymerisation von Vinylestern mit olefinisch ungesättigten Carbonsäuren bzw. deren Derivaten (z. B. Acrylsäure, Methacrylsäure, Maleinsäure, Fumarsäure, Crotonsäure, Itaconsäure) und nachfolgende Verseifung hergestellt werden.

Sie sind hinsichtlich ihres Molekulargewichtes in keiner Weise beschränkt, bevorzugt werden jedoch Polyvinylalkohole mit einem Molekulargewicht von mindestens 20 000 g/mol eingesetzt.

Der Gehalt an Carboxylgruppen, bezogen auf das zu vernetzende Polymere, liegt vorzugsweise im Bereich von 0,001 bis 30,0 Gew.-%, besonders bevorzugt im Bereich von 0,001 bis 5,0 Gew.-% und insbesondere im Bereich von 0,01 bis 2,0 Gew.-%.

Die Umsetzung der Ausgangsverbindungen (A) und (B) erfolgt vorzugsweise in mindestens einem inerten Lösungsmittel, wobei der Begriff "inertes Lösungsmittel" für solche Lösungsmittel steht, die unter den jeweiligen Reaktionsbedingungen nicht den Ablauf der gewünschten Reaktion stören bzw. gar verhindern. Ein in diesem Zusammenhang besonders zweckmäßiges Lösungsmittel ist Wasser.

Weiterhin führt man die Reaktion günstigerweise in Gegenwart saurer Katalysatoren durch. Geeignete Säuren umfassen sowohl organische Säuren, wie beispielsweise Essigsäure als auch mineralische Säuren, wie Salzsäure, Schwefelsäure und/oder Salpetersäure, wobei sich der Einsatz von Salzsäure, Schwefelsäure und/oder Salpetersäure in der Technik besonders bewährt hat. Die Durchführung der Reaktion erfolgt vorzugsweise derart, dass man die Komponenten (A) in wässeriger Lösung vorlegt, die Verbindung (B) in diese Lösung einträgt und anschließend den sauren Katalysator zutropft.

Die Reaktionstemperatur kann man über einen weiten Bereich variieren, aber häufig liegt die Temperatur im Bereich von -20,0 °C bis 100,0 °C, vorzugsweise im Bereich von 0,0 °C bis 80,0 °C. Ähnliches gilt für den Druck bei der die Umsetzung vollzogen wird. So kann die Reaktion sowohl bei Unterdruck als auch bei Überdruck stattfinden. Vorzugsweise wird sie aber bei Normaldruck durchgeführt. Obwohl die Reaktion auch unter Luft stattfinden kann, hat es sich im Rahmen der vorliegenden Erfindung als günstig erwiesen, die Umsetzung unter Schutzgasatmosphäre, vorzugsweise Stickstoff und/oder Argon, durchzuführen.

Die erfindungsgemäßen, vernetzten Polyvinylacetale enthalten in einer bevorzugten Ausführungsform Weichmacher. Als Weichmacher können dabei alle dem Fachmann bekannten Weichmacher eingesetzt werden. Der Weichmacher wird dabei in üblichen Mengen eingesetzt, die dem Fachmann bekannt sind. Bekannte Weichmacher für Polyvinylacetale , insbesondere für Polyvinylbutyrale sind dabei die Ester aliphatischer Mono- und Dicarbonsäuren mit ein- oder mehrwertigen Alkoholen bzw. Oligoalkylen-Glykolethern, Phosphorsäureester sowie verschiedene Phthalate, wie sie zum Beispiel in der US-A-5 137 954 offenbart werden. Vorzugsweise eingesetzt werden jedoch die Diester von Di-, Tri- und Tetraethylenglykolen mit aliphatischen Monocarbonsäuren, Adipinsäure-Dialkylester sowie die in der nicht-vorveröffentlichten DE-A-101 00 681 beschriebenen Dibenzoate von Alkylen- und Polyalkylenglykolen.

Gegenstand der vorliegenden Anmeldung ist auch ein Verfahren zur Herstellung der erfindungsgemäßen Polyvinylacetale, das dadurch gekennzeichnet ist, dass mindestens ein Polyvinylacetal (I), gegebenenfalls zusammen mit mindestens einem Weichmacher, bei Massetemperaturen im Bereich von 120 bis 280°C, bevorzugt im Bereich von 140 bis 260°C, thermisch vernetzt wird.

Die thermische Vernetzung des Polyvinylacetals (I) kann dabei mit allen dem Fachmann bekannten beheizbaren Aggregaten, wie z.B. Öfen, Knetern, Extrudern, Pressen oder Autoklaven durchgeführt werden. Bevorzugt erfolgt die thermische Vernetzung jedoch in Extrudern oder in Knetaggregaten, da diese eine gute Homogenisierung mit dem/den Weichmachern, der/die in einer bevorzugten Ausführungsform enthalten ist/sind, gewährleisten. Die Vernetzung ist dabei erkennbar an dem im Vergleich zum unvernetzten Polyvinylacetal (I) höheren Molekulargewicht des vernetzten Polyvinylacetals.

Der Grad der Vernetzung kann - je nach Anwendung - frei gewählt werden. Dennoch hat es sich im Rahmen der vorliegenden Erfindung als ganz besonders zweckmäßig erwiesen, dass mindestens 10 mol-%, vorzugsweise mindestens 20 mol-%, zweckmäßigerweise mindestens 30 mol-%, insbesondere mindestens 40 mol-%, aller ursprünglich im Polyvinylacetal (I) enthaltenen Carboxylgruppen verestert werden.

Mittels der bevorzugten Extrusion lassen sich die erfindungsgemäßen Polyvinylacetale in beliebiger Form herstellen. Gegenstand der vorliegenden Anmeldung sind somit auch Formkörper enthaltend die erfindungsgemäßen Polyvinylacetale, vorzugsweise die erfindungsgemäßen Polyvinylbutyrale. Bevorzugt ist jedoch die direkte Verarbeitung zu Folien, mit Hilfe von Breitschlitzdüsen. Ein bevorzugter Gegenstand der vorliegenden Erfindung sind somit Folien. Verfahren zur Herstellung von Polyvinylacetal-, insbesondere von Polyvinalbutyral-Folien sind dem Fachmann hinlänglich bekannt.

Die erfindungsgemäßen Folien können dabei weitere, übliche Zusätze, wie z.B. Oxidationsstabilisatoren, UV-Stabilisatoren, Farbstoffe, Füllstoffe, Pigmente und/oder Antihaftmittel enthalten.

Aus den erfindungsgemäßen Folien, die die vernetzten Polyvinylacetale enthalten, können gemäß dem Fachmann bekannten Verfahren Verbundsicherheitsgläser hergestellt werden.

Ein weiterer Gegenstand der vorliegenden Erfindung ist somit die Verwendung der erfindungsgemäßen Folien in Verbundsicherheitsgläsern.

Darüber hinaus finden die erfindungsgemäßen, vorzugsweise hochmolekularen, vernetzten Polyvinylacetale Verwendung in Beschichtungen von Substraten.

Die Beschichtungen können dabei auf den unterschiedlichsten Substraten, wie z.B. Holz, Metall, Kunststoff, Glas, Textilien, Papier, Leder sowie keramischen und mineralischen Untergründen, appliziert werden.

Gegenstand der vorliegenden Anmeldung sind somit auch Beschichtungen, enthaltend die erfindungsgemäßen, vorzugsweise hochmolekularen, vernetzten Polyvinylacetale.

Die Beschichtungen können dabei als weitere Bestandteile beispielsweise weitere Polymerharze, Weichmacher, Pigmente, Füllstoffe, Stabilisatoren, Haftungsverbesserer, rheologische Hilfsmittel, den pH-Wert beeinflussende Additive und Additive, die chemische Reaktionen sowohl zwischen dem erfindungsgemäßen, vorzugsweise hochmolekularen, Polyvinylacetal und anderen Polymerharzen als auch zwischen den anderen Polymerharzen untereinander katalysieren, enthalten.

Die Aufbringung der Beschichtung kann dabei sowohl als Pulver, das anschließend bei erhöhter Temperatur aufgeschmolzen und vernetzt wird, als auch aus organischer Lösung mittels dem Fachmann bekannten Beschichtungsverfahren erfolgen. Bei Anwendung aus Lösung wird das unvernetzte, Carboxylgruppen-haltige Polyvinylacetal (I), gegebenenfalls zusammen mit weiteren Bindemitteln sowie gegebenenfalls mit anderen Bestandteilen, wie z.B. Weichmachern, Pigmenten, Füllstoffen, Stabilisatoren, Haftungsverbesserern, rheologische Hilfsmitteln, im Lösemittel oder Lösemittelgemisch gelöst und dann auf das zu beschichtende Substrat aufgebracht. Die Vernetzung erfolgt nach Abdampfen des Lösemittels. Vorzugsweise erfolgt die Vernetzung der Beschichtung in einem Temperaturbereich zwischen 120 und 280°C, inbesondere im Temperaturbereich von 140 bis 260°C. Die Vernetzungsreaktion kann im Allgemeinen durch pH-Wert senkende Additive, wie z.B. organische und/oder anorganische Säuren, unterstützt werden.

Bei Anwendung in Beschichtungen zeigt sich die Vernetzung in einer Zunahme der Lösungsmittelbeständigkeit der Beschichtung sowie einer Zunahme des Molekulargewichts im Vergleich zum unvernetzten Polyvinylacetal (I).

Gemäß einem weiteren Aspekt der vorliegenden Erfindung eignen sich die erfindungsgemäßen Polyvinylacetale insbesondere auch zur Herstellung ionenleitfähiger Zwischenschichten für elektrochrome Systeme.

Im Rahmen einer bevorzugten Ausführungsform der vorliegenden Erfindung wird das erfindungsgemäße vernetzte Polyvinylacetal zusammen mit einem weiteren Polyvinylacetal eingesetzt, welches ein Gewichtsmittel des Molekulargewichts kleiner 10 000 000 g/mol, vorzugsweise kleiner 5 000 000 g/mol, zweckmäßigerweise kleiner 1 000 000 g/mol, bevorzugt kleiner 500 000 g/mol, insbesondere kleiner 250 000 g/mol, aufweist. Auf diese Weise können die insbesondere die Verarbeitungseigenschaften des erfindungsgemäßen vernetzten Polyvinylacetals, insbesondere bei der Extrusion, deutlich verbessert werden. den

Methoden zur Bestimmung des Gewichtsmittel des Molekulargewichts des Polyvinylacetals sind dem Fachmann bekannt. Sie kann beispielsweise mittels statischer Lichtstreuung oder Gelpermeationschromatographie in einem geeignetem Lösungsmittel erfolgen. Alternativ bietet sich auch seine Ermittlung ausgehend vom korrespondieren Polyvinylalkohol mittels statischer Lichtstreuung oder Gelpermeationschromatographie in einer einem geeignetem Lösungsmittel an.

In diesem Zusammenhang besonders zweckmäßige Polyvinylacetale sind durch Umsetzung mindestens eines Polymers (A') mit mindestens einer Verbindung (B') erhältlich. Dabei umfasst das Polymer (A'), jeweils bezogen auf sein Gesamtgewicht,
a.) 1,0 bis 99,9 Gew.-% Struktureinheiten der Formel (1) 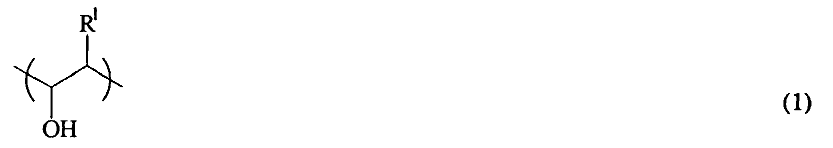
b.) 0 bis 99,0 Gew.-% Struktureinheiten der Formel (2) 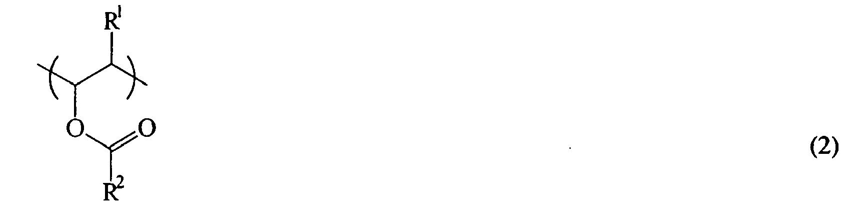
c.) 0 bis 70,0 Gew.-% von Struktureinheiten der Formel (3) 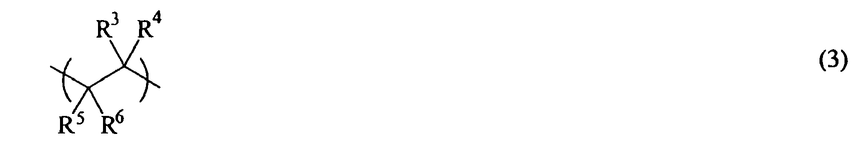 worin R³, R⁴, R⁵ und R⁶, jeweils unabhängig voneinander Reste mit einem Molekulargewicht im Bereich von 1 bis 500 g/mol sind,
d.) weniger als 0,1 Gew.-%, vorzugsweise weniger als 0,01 Gew.-%, zweckmäßigerweise weniger als 0,001 Gew.-%, insbesondere keine, Struktureinheiten der Formel (4)

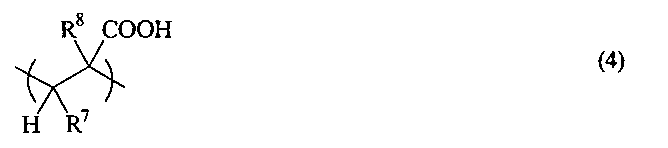

Dabei sind die Reste R¹ bis R⁸ wie vorstehend im Zusammenhang mit dem Polymer (A) beschrieben definiert und die besonders bevorzugten Ausführungsformen entsprechen denen im Zusammenhang mit dem Polymer (A) aufgeführten Ausführungsformen, wobei für die Polymere (A) und (A') die Reste jeweils unabhängig voneinander gewählt werden können.

Die Verbindung (B') genügt der Formel (5) 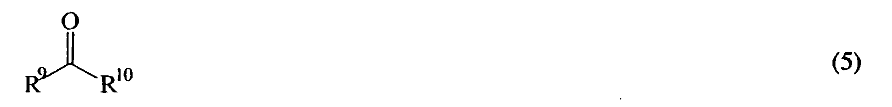 wobei die Reste R⁹ bis R¹⁰ wie vorstehend im Zusammenhang mit der Verbindung (B) beschrieben definiert sind und die besonders bevorzugten Ausführungsformen denen im Zusammenhang mit der Verbindung (B) aufgeführten Ausführungsformen entsprechen, wobei jedoch für die Verbindung (B) und (B') die Reste jeweils unabhängig voneinander gewählt werden können.

Die Gesamtanzahl an Struktureinheiten der Formel (2) im Polymer (A') ist vorzugsweise im Bereich von 0,01 bis 40 mol-%, zweckmäßigerweise im Bereich von 0,1 bis 25,0 mol-%, insbesondere im Bereich von 0,5 bis 15,0 mol-%, jeweils bezogen auf die Gesamtanzahl an Struktureinheiten der Formel (1) und (2). Dabei wird gemäß einer bevorzugten Ausführungsform der vorliegenden Erfindung ein Polymer (A') einsetzt, welches bezogen auf die Gesamtanzahl an Struktureinheiten der Formel (1) und (2) 0,5 bis 2,5 mol-% Struktureinheiten der Formel (2) enthält.

Im Rahmen der vorliegenden Erfindung kann das Polymer (A') einen syndiotaktischen, isotaktischen und/oder ataktischen Kettenaufbau besitzen. Weiterhin kann es sowohl als random- als auch als Blockcopolymer vorliegen.

Die Viskosität des Polymers (A') ist erfindungsgemäß von untergeordneter Bedeutung, prinzipiell können sowohl niedermolekulare als auch hochmolekulare Polymere (A') eingesetzt werden. Dennoch hat es sich im Rahmen der vorliegenden Erfindung als ganz besonders günstig erwiesen, dass das Polymer (A') eine Viskosität im Bereich von 1 bis 70 mPas, vorzugsweise im Bereich von 2 bis 40 mPas, zweckmäßigerweise im Bereich von 2,5 bis 35 mPas, insbesondere im Bereich von 3 bis 30 mPas, aufweist (gemessen als 4 Gew.-%-ige wässrige Lösung nach Höppler bei 20°C, DIN 53015).

Die Herstellung dieser als Rohstoffe eingesetzten Polyvinylacetale ist bekannt und wird zum Beispiel in der DE 10011096 für andere Anwendungen beschrieben.

Das Mischungsverhältnis des erfindungsgemäßen, selbstvernetzenden Polyvinylacetals und des Polyvinylacetals mit einem Gewichtsmittel des Molekulargewichts kleiner 10 000 000 g/mol kann im Rahmen der vorliegenden Erfindung prinzipiell beliebig gewählt werden. Es hat sich jedoch als überaus günstig erwiesen, dass das selbstvernetzende Polyvinylacetal und das Polyvinylacetal mit einem Gewichtsmittel des Molekulargewichts kleiner 1 000 000 g/mol in einem Gewichtsverhältnis im Bereich von 1 : 10 bis 10 : 1, vorzugsweise in einem Gewichtsverhältnis im Bereich von 1 : 5 bis 5 : 1, zweckmäßigerweise in einem Gewichtsverhältnis im Bereich von 1 : 1 bis 1 : 10, insbesondere in einem Gewichtsverhältnis im Bereich von 1 : 1 bis 1 : 5, vorliegen.

Die nachfolgenden Beispiele und Vergleichsbeispiele dienen zur Erläuterung der Erfindung, ohne dass hierdurch eine Beschränkung des Erfindungsgedanken erfolgen soll.

### A. Bestimmungsmethoden

### A.1 Bestimmung des Gehalts an Vinylacetat-Einheiten von Polyvinylacetalen

Das Polyvinylacetal wurde in einem Benzylalkohol/Ethanol-Gemisch gelöst. Die Acetatgruppen wurden mit einem Überschuß alkoholischer Kalilauge verseift.

Die überschüssige Kalilauge wurde mit Salzsäure zurücktitriert. Der Gehalt an Vinylacetat-Einheiten wurde anhand des Salzsäure-Verbrauchs errechnet.

### A.2 Bestimmung der dynamischen Viskosität einer Lösung von

### Polyvinylalkohol

96,00 +/- 0,01g destilliertes Wasser und 4,00 +/- 0,01g Polyvinylalkohol wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53015; Methode nach Höppler) bei 20°C mit der Kugel 3 bestimmt.

### A.3 Bestimmung des Gehalts an Acetyl-Gruppen von Polyvinylalkohol

Analog Bestimmungsmethode A.1 wurde eine alkalische Esterhydrolyse mit einem Kaliumhydroxid-Überschuß durchgeführt und anschließend mit Salzsäure zurücktitriert. Ein Unterschied besteht lediglich in der Durchführung der gesamten Analyse im wässrigen Medium, da der als Edukt eingesetzte Polyvinylalkohol wasserlöslich ist.

### A.4 Schmelzindex

Die Folien wurden vor Messung des Schmelzindexes 24 h bei 23°C und einer relativen Luftfeuchte von 50 % klimatisiert. Die Messung der Folien erfolgte mit einem Schmelzindex-Prüfgerät (Hersteller: Göttfert, Typ: MP-D) bei 190 °C mit einer Belastung von 2,16 kg unter Verwendung einer 2 mm-Düse gemäß ISO 1133.

### A.5 Pummel-Prüfung

Die Prüfkörper wurden wie folgt hergestellt: Die Folien wurden bei einem Klima von 23 °C/30% relativer Luftfeuchte für 24 h klimatisiert. Die Verlegung erfolgte auf 2 mm Floatglas in Feuer/Zinn-Orientierung der Folie zur Glasoberfläche. Das Glas wurde vor Belegung mit vollentsalztem Wasser gewaschen. Die Herstellung der Verbundglasscheiben erfolgte durch Verpressen der Verbunde im Vorverbundofen mit Kalanderwalzen bei Temperaturen zwischen 40°C und 100 °C, gefolgt vom Verpressen der Verbunde in einem Autoklaven bei einem Druck von 12 bar und einer Temperatur von 140 °C für 30 min.

Aus den Verbundgläsern wurden für die Durchführung der Pummel-Prüfung Prüfkörper mit einer Größe von 10 x 30 cm geschnitten. Die Durchführung des Tests erfolgte gemäß DE10100681. Bewertet wurde die Haftung der Folie zur Feuer-Seite des Glases.

### A.6 Molekulargewicht Mw

Die Bestimmung der Molekulargewichte Mw (= Gewichtsmittel) der Polyvinylbutyrale erfolgte mittels Gelpermeationschromatographie (GPC) in Eisessig unter Verwendung von RI-Detektoren. Die Kalibrierung der Detektoren erfolgte mittels PVB-Eichstandards, deren Absolutwerte mittels statischer Lichtstreuung ermittelt wurden.

### B. Beispiele

Als Polymer-Rohstoffe wurden verwendet (Gehaltsangaben in mol-%; Viskositätsangaben für 4 Gew.-%-ige wässrige Lösungen nach DIN 53015):
- Polymer A: 4,0% Acetyl, 2,1% Itaconsäure, 93,9% Vinylalkohol; Viskosität 30,9 mPas
- Polymer B: 1,8% Acetyl, 3,9% Maleinsäure, 94,3% Vinylalkohol; Viskosität 12,7 mPas
- Polymer C: 1,6% Acetyl, 98,4% Vinylalkohol; Viskosität 11,0 mPas
- Polymer D: 2,5% Acetyl, 0,9% Itaconsäure, 96,6% Vinylalkohol; Viskosität 31,3 mPas
- Polymer E: 0,6% Acetyl, 99,4% Vinylalkohol; Viskosität 30,0 mPas

### Beispiel 1

In einem 10 Liter Glasreaktor wurden 2008g destilliertes Wasser und 5192g einer 10,40 Gew.-% carboxylgruppen-modifizierten Polyvinylalkohol enthaltenden wässrigen Lösung vorgelegt. Dabei handelte es sich um eine 75:25-Mischung der Polymere A und B, die eine Viskosität nach Höppler von 26,1 mPas aufwies (gemessen als 4 Gew.-%-ige wässrige Lösung nach DIN 53015). Unter Rühren wurde bis zum Erreichen von 90°C Innentemperatur erhitzt und dann abgekühlt. Bei 35°C wurden langsam 308,9g Butyraldehyd zugegeben, wobei die Temperatur um weitere 5°C fiel. Bei 14°C wurden innerhalb von 15 Minuten 78 ml 20 Gew.-%-ige Salzsäure zugetropft. Das Produkt fiel 53 Minuten nach Beendigung der Salzsäure-Dosierung als farbloser Niederschlag aus der Reaktionslösung aus. Direkt im Anschluß wurden innerhalb von 15 Minuten nochmal 374 ml 20 Gew.-%-iger Salzsäure zugegeben. Danach wurde die Suspension innerhalb von 90 Minuten auf 65 °C erwärmt und 1 Stunde unter fortgesetztem Rühren bei dieser Temperatur gehalten. Abschließend wurde das Polymer abgesaugt, bis zur neutralen Reaktion des Filtrats mit destilliertem Wasser gewaschen und bei 40°C im Vakuum getrocknet. Das erhaltene Polyvinylacetal wies einen Gehalt von 6,3 Gew.-% Vinylacetat-Einheiten auf.

### Beispiel 2

In einem 10 Liter Glasreaktor wurden 2052g destilliertes Wasser und 5148g einer 10,49 Gew.-% carboxylgruppen-modifizierten Polyvinylalkohol enthaltenden wässrigen Lösung vorgelegt. Dabei handelte es sich um eine 80:20-Mischung der Polymere A und C, die eine Viskosität nach Höppler von 26,2 mPas aufwies (gemessen als 4 Gew.-%-ige wässrige Lösung nach DIN 53015). Unter Rühren wurde bis zum Erreichen von 90°C Innentemperatur erhitzt und dann abgekühlt. Bei 35°C wurden langsam 308,9g Butyraldehyd zugegeben, wobei die Temperatur um weitere 5°C fiel. Bei 14°C wurden innerhalb von 15 Minuten 78 ml 20 Gew.-%-ige Salzsäure zugetropft. Das Produkt fiel 27 Minuten nach Beendigung der Salzsäure-Dosierung als farbloser Niederschlag aus der Reaktionslösung aus.

Nach weiteren 18 Minuten wurden innerhalb von 15 Minuten nochmal 374 ml 20 Gew.-%-iger Salzsäure zugegeben. Anschließend wurde die Suspension innerhalb von 90 Minuten auf 65°C erwärmt und 1 Stunde unter fortgesetztem Rühren bei dieser Temperatur gehalten. Danach wurde das Polymer abgesaugt, bis zur neutralen Reaktion des Filtrats mit destilliertem Wasser gewaschen und bei 40°C im Vakuum getrocknet. Das erhaltene Polyvinylacetal wies einen Gehalt von 5,1 Gew.-% Vinylacetat-Einheiten auf.

### Beispiel 3

In einem 10 Liter Glasreaktor wurden 1911g destilliertes Wasser und 5289g einer 10,21 Gew.-% carboxylgruppen-modifizierten Polyvinylalkohol enthaltenden wässrigen Lösung vorgelegt. Dabei handelte es sich um eine 80:20-Mischung der Polymere D und C, die eine Viskosität nach Höppler von 26,2 mPas aufwies (gemessen als 4%-ige wässrige Lösung nach DIN 53015). Unter Rühren wurde bis zum Erreichen von 90°C Innentemperatur erhitzt und dann abgekühlt. Bei 35°C wurden langsam 308,9g Butyraldehyd zugegeben, wobei die Temperatur um weitere 5°C fiel. Bei 14°C wurden innerhalb von 15 Minuten 78 ml 20 Gew.-%-ige Salzsäure zugetropft. Das Produkt fiel 32 Minuten nach Beendigung der Salzsäure-Dosierung als farbloser Niederschlag aus der Reaktionslösung aus. Nach weiteren 13 Minuten wurden innerhalb von 15 Minuten nochmal 374 ml 20 Gew.-%-iger Salzsäure zugegeben. Anschließend wurde die Suspension innerhalb von 90 Minuten auf 65°C erwärmt und 1 Stunde unter fortgesetztem Rühren bei dieser Temperatur gehalten. Danach wurde das Polymer abgesaugt, bis zur neutralen Reaktion des Filtrats mit destilliertem Wasser gewaschen und bei 40°C im Vakuum getrocknet. Das erhaltene Polyvinylacetal wies einen Gehalt von 3,8 Gew.-% Vinylacetat-Einheiten auf.

### Beispiel 4

In einem 10 Liter Glasreaktor wurden 1927g destilliertes Wasser und 5273g einer 10,24 Gew.-% carboxylgruppen-modifizierten Polyvinylalkohol enthaltenden wässrigen Lösung vorgelegt. Dabei handelte es sich um eine 58:42-Mischung der Polymere B und E, die eine Viskosität nach Höppler von 26.0 mPas aufwies (gemessen als 4 Gew.-%-ige wässrige Lösung nach DIN 53015). Unter Rühren wurde bis zum Erreichen von 90°C Innentemperatur erhitzt und dann abgekühlt. Bei 35°C wurden langsam 308,9g Butyraldehyd zugegeben, wobei die Temperatur um weitere 5°C fiel. Bei 14°C wurden innerhalb von 15 Minuten 78 ml 20 Gew.-%-ige Salzsäure zugetropft. Das Produkt fiel 53 Minuten nach Beendigung der Salzsäure-Dosierung als farbloser Niederschlag aus der Reaktionslösung aus. Direkt im Anschluß wurden innerhalb von 15 Minuten nochmal 374 ml 20 Gew.-%-iger Salzsäure zugegeben. Danach wurde die Suspension innerhalb von 90 Minuten auf 65°C erwärmt und 1 Stunde unter fortgesetztem Rühren bei dieser Temperatur gehalten. Abschließend wurde das Polymer abgesaugt, bis zur neutralen Reaktion des Filtrats mit destilliertem Wasser gewaschen und bei 40°C im Vakuum getrocknet. Das erhaltene Polyvinylacetal wies einen Gehalt von 5,8 Gew.-% Vinylacetat-Einheiten auf.

### Vergleichsbeispiel 5

In einem 10 Liter Glasreaktor wurden 4058g destilliertes Wasser und 4239g einer 14,68 Gew.-% Polyvinylalkohol enthaltenden wässrigen Lösung vorgelegt. Der dabei verwendete Polyvinylalkohol wies einen Acetyl-Gehalt von 0,8 mol-%, einen Vinylalkohol-Gehalt von 99,2 mol-% und eine Viskosität nach Höppler von 26,5 mPas auf (gemessen als 4 Gew.-%-ige wässrige Lösung nach DIN 53015). Anschließend wurde unter Rühren bis zum Erreichen von 90°C Innentemperatur erhitzt und dann abgekühlt. Bei 35°C wurden langsam 355,9g Butyraldehyd zugegeben, wobei die Temperatur um weitere 5°C fiel. Bei 14°C wurden innerhalb von 15 Minuten 90 ml 20 Gew.-%-ige Salzsäure zugetropft. Das Produkt fiel 7 Minuten nach Beendigung der Salzsäure-Dosierung als farbloser Niederschlag aus der Reaktionslösung aus. Nach weiteren 38 Minuten wurden innerhalb von 15 Minuten nochmal 431 ml 20 Gew.-%-iger Salzsäure zugegeben. Anschließend wurde die Suspension innerhalb von 90 Minuten auf 65 °C erwärmt und 1 Stunde unter fortgesetztem Rühren bei dieser Temperatur gehalten. Danach wurde das Polymer abgesaugt, bis zur neutralen Reaktion des Filtrats mit destilliertem Wasser gewaschen und bei 40°C im Vakuum getrocknet. Das erhaltene Polyvinylacetal wies einen Gehalt von 1,1 Gew.-% Vinylacetat-Einheiten auf.

Vergleichsbeispiel 6 und Beispiele 7-14 zeigen den Einsatz der erfindungsgemäßen Polyvinylacetale in Folien für Verbundsicherheitsglas.

### Vergleichsbeispiel 6

296 g PVB gemäß Vergleichsbeispiel 5, 104 g Triethylenglykol-di-n-heptansäureester (3G7) und 0,75 g Tinuvin P wurden zu Folie extrudiert. Das Polyvinylacetal wurde vor der Extrusion in einem Labormischer (Hersteller: Brabender, Modell 826801) mit Weichmacher gemischt. Im Weichmacher wurde vor Herstellung der Mischung der UV-Stabilisator Tinuvin^{®} P (Hersteller: Ciba Specialty Chemicals) gelöst. Aus der PVB/Weichmacher-Mischung wurden Flachfolie mit einer Dicke von 0,8 mm extrudiert. Die Extrusion erfolgten auf einem Doppelschneckenextruder mit gegenlaufenden Schnecken (Hersteller: Haake, System Rheocord 90), ausgerüstet mit Schmelzepumpe und Breitschlitzdüse. Die Einstellung der Heizzonen des Extruders war wie folgt:
Zone 1 - 3 (Zylinder): 240 °C
Schmelzepumpe: 220°C
Düse: 150 °C

Beispiele 7 - 10 belegen den Molekulargewic htsaufbau bei der Extrusion, erkennbar am der starken Zunahme der Schmelzviskosität.

### Beispiele 7 - 10

Vorgehen analog Vergleichsbeispiel 6. Es wurde Polyvinylacetale gemäß Beispielen 1 - 4 eingesetzt. Aufgrund starkem Molekulargewichtsaufbaus und - daraus resultierend - zu hoher Viskosität der Schmelze musste die Extrusion bei Beispielen 7 - 10 nach kurzer Zeit abgebrochen werden, so dass keine verwertbare Folie erhalten wurde.

Bei den Beispielen 11 - 14 wurden daher die PVB-Typen gemäß Beispielen 1 - 4 mit PVB gemäß Vergleichsbeispiel 5 abgemischt, um so den Vernetzungsgrad zu verringern und die Extrusion zu ermöglichen. Die Molekulargewichte der Abmischungen wurden vor und nach Extrusion mittels GPC bestimmt. Der Molekulargewichstaufbau ist erkennbar an den zunehmenden Molekulargewichten Mw der Polymeren sowie an den niedrigen Werten des MFR 190. Die Ergebnisse sind gemäß Tabelle 1.

### Beispiel 11

Es wurden 236,8 g PVB gemäß Vergleichsbeispiel 5 und 59,2 PVB gemäß Beispiel 1 eingesetzt. Sonstige Formulierungsbestandteile und Durchführung wie Vergleichsbeispiel 6.

### Beispiel 12

Es wurden 236,8 g PVB gemäß Vergleichsbeispiel 5 und 59,2 PVB gemäß Beispiel 2 eingesetzt. Sonstige Formulierungsbestandteile und Durchführung wie Vergleichsbeispiel 6.

### Beispiel 13

Es wurden 236,8 g PVB gemäß Vergleichsbeispiel 5 und 59,2 PVB gemäß Beispiel 3 eingesetzt. Sonstige Formulierungsbestandteile und Durchführung wie Vergleichsbeispiel 6.

### Beispiel 14

Es wurden 236,8 g PVB gemäß Vergleichsbeispiel 5 und 59,2 PVB gemäß Beispiel 4 eingesetzt. Sonstige Formulierungsbestandteile und Durchführung wie Vergleichsbeispiel 6.

**Tabelle 1: Ergebnisse der Folienausprüfung**

| | **Vergleichs beispiel 6** | **Beispiel 11** | **Beispiel 12** | **Beispiel 13** | **Beispiel 14** |
|---|---|---|---|---|---|
| Mw PVB, vor Extrusion [g/mol] | 107850 | 106150 | 104750 | 110350 | 102250 |
| Mw PVB, nach Extrusion [g/mol] | 104450 | 128800 | 125300 | 121200 | 119900 |
| MFR 190 [g/10 min] | 2,36 | Nicht messbar | 0,54 | 0,74 | 0,92 |
| Pummel Feuerseite | 9 | 9 | 9 | 9 | 9 |

Beispiel 15 und Vergleichsbeispiel 16 zeigen den Einsatz der erfindungsgemäßen Polyvinylacetale in Beschichtungen.

### Beispiel 15

12 g des PVB's aus Beispiel 1 wurden in einem Lösemittelgemisch aus 66,7 g Ethanol, 38,2 g n-Butanol, 16,6 g 3-Methoxybutanol sowie 16,6 g Ethylenglycol gelöst. Die Lösung wurde mit einer Naßschichtdicke von 200 µm auf ein Prüfblech aus Aluminium aufgetragen und bei Raumtemperatur an Luft vorgetrocknet. Danach wurde das Prüfblech bei 180 °C für 15 min eingebrannt. Die resultierende Trockenschichtdicke, gemessen mit dem Minitest 600 FN2 der Fa. Erichsen GmbH & Co. KG, ergab einen Mittelwert von 4,8 µm.

### Vergleichsbeispiel 16

12 g des PVB's aus Vergleichsbeispiel 1 wurden in dem Lösemittelgemisch aus Beispiel 5 gelöst und ebenfalls mit einer Naßschichtdicke von 200 µm auf ein Prüfblech aus Aluminium aufgetragen. Vortrocknung und Einbrennen wurde analog zu Beispiel 15 durchgeführt. Die nach der im Beispiel 15 beschriebene Methode zur Messung der Trockenschichtdicke ergab einen Wert von 3,4 µm.

Zur Ausprüfung der Beschichtungen aus Beispiel 15 und Vergleichsbeispiel 16 wurden der Ethanolabriebtest sowie der Acetonabriebtest verwendet. Dazu wurde ein Baumwolltuch mit Ethanol bzw. Aceton getränkt und über die eingebrannte Beschichtung gerieben. Tabelle 2 gibt die Anzahl der Doppelstriche wieder, die angewendet wurden, um die Beschichtung durchzureiben. Höhere Zahlenwerte in diesem Test sagen aus, daß die Beschichtung aus Beispiel 15 viel langsamer als die Beschichtung von Vergleichsbeispiel 16 von Ethanol bzw. Aceton angegriffen wird, das heißt, daß erstere stark vernetzt ist. Unterstützt wird dieses Ergebnis zusätzlich durch die Tatsache, daß die Trockenschichtdicke der Beschichtung aus Vergleichsbeispiel 15 geringer war als die aus Beispiel 16 und daher theoretisch eher hätte durchgerieben werden müssen.

**Tabelle 2: Ergebnisse der Abriebtests**

| | Beispiel 15 | Vergleichsbeispiel 16 |
|---|---|---|
| Anzahl der Doppelstriche im Acetonabriebtest | > 100 | 30 |
| Anzahl der Doppelstriche im Ethanolabriebtest | > 100 | 15 |

## Patentansprüche

1. Vernetztes Polyvinylacetal, **dadurch gekennzeichnet, dass** es aus mindestens einem Polyvinylacetal (I) erhältlich ist,
welches durch Umsetzung mindestens eines Polymers (A), das
a.) 1,0 bis 99,9 Gew.-% Struktureinheiten der Formel (1) 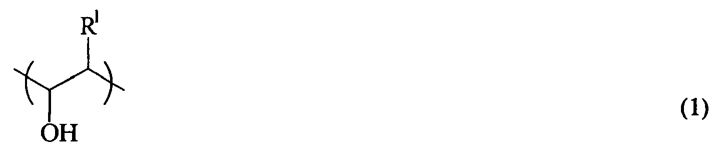 worin R¹ Wasserstoff oder Methyl bedeutet,
b.) 0 bis 99,0 Gew.-% Struktureinheiten der Formel (2) 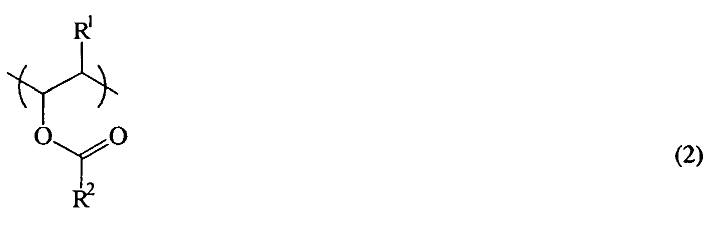 worin R² Wasserstoff oder einen Alkylrest mit 1 bis 6 Kohlenstoffatomen darstellt,
c.) 0 bis 70,0 Gew.-% von Struktureinheiten der Formel (3) 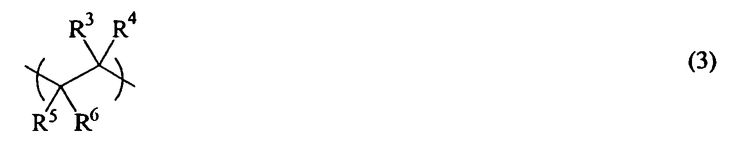 worin R³, R⁴, R⁵ und R⁶, jeweils unabhängig voneinander Reste mit einem Molekulargewicht im Bereich von 1 bis 500 g/mol sind,
d.) 0,0001 bis 30,0 Gew.-% Struktureinheiten der Formel (4) 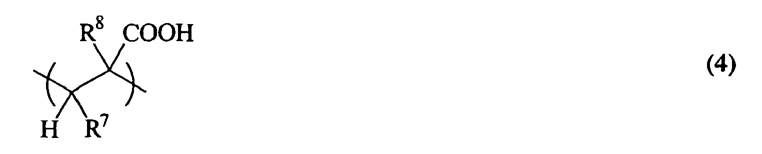
worin R⁷ und R⁸, jeweils unabhängig voneinander, Wasserstoff, eine Carboxylgruppe oder eine Alkylgruppe mit 1 bis 10 Kohlenstoffatomen darstellt, die gegebenenfalls eine oder mehrere COOH-Gruppen als Substituenten aufweisen kann,
jeweils bezogen auf das Gesamtgewicht des Polymers (A) enthält,
mit mindestens einer Verbindung (B) der Formel (5) erhältlich ist, 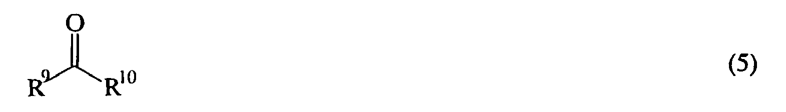 worin R⁹ und R¹⁰ jeweils unabhängig voneinander Wasserstoff, COOH, eine Alkylgruppe mit 1 bis 10 Kohlenstoffatomen oder eine gegebenenfalls substituierte Arylgruppe mit 6 bis 12 Kohlenstoffatomen sind,
indem man zumindest teilweise Gruppen der Formel (1) und der Formel (4) miteinander verestert.

2. Polyvinylacetal gemäß Anspruch 1, **dadurch gekennzeichnet, dass** dessen Gesamtgehalt an veresterten und nicht-veresterten Carboxylgruppen im Bereich von 0,001 bis 10,0 Gew.-%, bezogen auf das Gesamtgewicht des Polyvinylacetals, liegt.

3. Polyvinylacetal gemäß Anspruch 2, **dadurch gekennzeichnet, dass** dessen Gesamtgehalt an veresterten und nicht-veresterten Carboxylgruppen im Bereich von 0,01 bis 5,0 Gew.-%, bezogen auf das Gesamtgewicht des Polyvinylacetals, liegt.

4. Polyvinylacetal gemäß Anspruch 3, **dadurch gekennzeichnet, dass** dessen Gesamtgehalt an veresterten und nicht-veresterten Carboxylgruppen im Bereich von 0,01 bis 2,0 Gew.-%, bezogen auf das Gesamtgewicht des Polyvinylacetals, liegt.

5. Polyvinylacetal gemäß mindestens einem der vorhergehenden Ansprüche, **dadurch gekennzeichnet, dass** es Weichmacher enthält.

6. Verfahren zur Herstellung eines Polyvinylacetals gemäß mindestens einem der vorhergehenden Ansprüche, **dadurch gekennzeichnet, dass** mindestens ein Polyvinylacetal (I), gegebenenfalls zusammen mit mindestens einem Weichmacher, bei Massetemperaturen im Bereich von 120 bis 280°C thermisch vernetzt wird.

7. Verfahren gemäß Anspruch 6, **dadurch gekennzeichnet, dass** die thermische Vernetzung in einem Extruder, Knetaggregat oder einem anderen beheizbaren Aggregat durchgeführt wird.

8. Formmasse enthaltend ein Polyvinylacetal gemäß mindestens einem der Ansprüche 1 bis 5.

9. Formmasse gemäß Anspruch 8 weiterhin enthaltend ein Polyvinylacetal mit einem Gewichtsmittel des Molekulargewichts kleiner 1 000 000 g/mol.

10. Formmasse gemäß Anspruch 9, **dadurch gekennzeichnet, dass** das Polyvinylacetal mit einem Gewichtsmittel des Molekulargewichts kleiner 10 000 000 g/mol durch Umsetzung mindestens eines Polymers (A'), das
a.) 1,0 bis 99,9 Gew.-% Struktureinheiten der Formel (1) 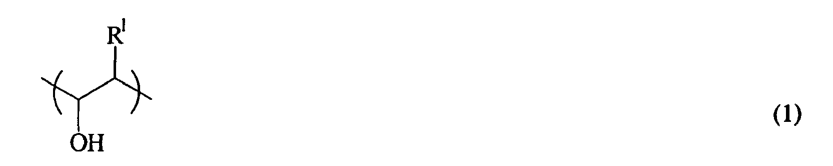 worin R¹ Wasserstoff oder Methyl bedeutet,
b.) 0 bis 99,0 Gew.-% Struktureinheiten der Formel (2) 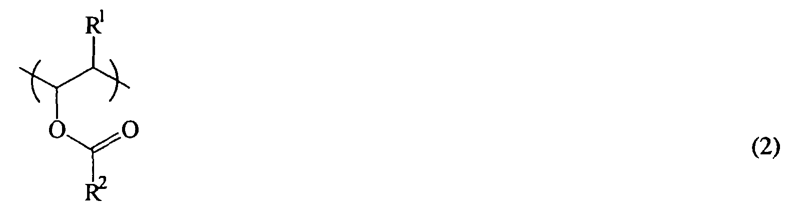 worin R² Wasserstoff oder einen Alkylrest mit 1 bis 6 Kohlenstoffatomen darstellt,
c.) 0 bis 70,0 Gew.-% von Struktureinheiten der Formel (3) 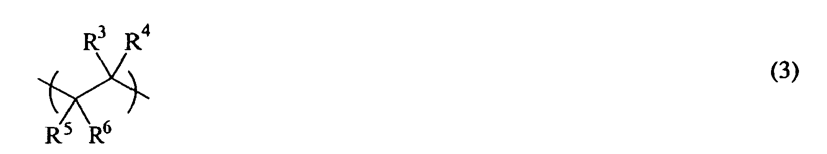 worin R³, R⁴, R⁵ und R⁶, jeweils unabhängig voneinander Reste mit einem Molekulargewicht im Bereich von 1 bis 500 g/mol sind,
d.) weniger als 0,1 Gew.-% Struktureinheiten der Formel (4) 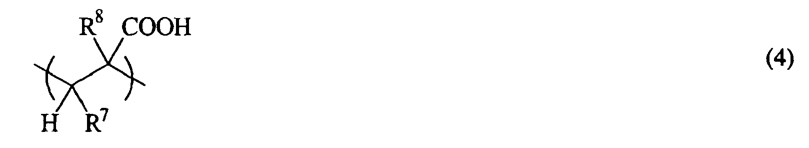
worin R⁷ und R⁸, jeweils unabhängig voneinander, Wasserstoff, eine Carboxylgruppe oder eine Alkylgruppe mit 1 bis 10 Kohlenstoffatomen darstellt, die gegebenenfalls eine oder mehrere COOH-Gruppen als Substituenten aufweisen kann,
jeweils bezogen auf das Gesamtgewicht des Polymers (A') enthält,
mit mindestens einer Verbindung (B') der Formel (5) erhältlich ist, 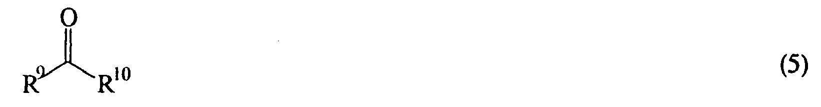 worin R⁹ und R¹⁰ jeweils unabhängig voneinander Wasserstoff, COOH, eine Alkylgruppe mit 1 bis 10 Kohlenstoffatomen oder eine gegebenenfalls substituierte Arylgruppe mit 6 bis 12 Kohlenstoffatomen sind.

11. Formmasse gemäß mindestens einem der Ansprüche 9 oder 10, **dadurch gekennzeichnet, dass** das vernetzte Polyvinylacetal und das Polyvinylacetal mit einem Gewichstmittel des Molekulargewichts kleiner 10 000 000 g/mol in einem Gewichtsverhältnis im Bereich von 1 : 10 bis 10 : 1 vorliegen.

12. Folie enthaltend eine Formmasse gemäß mindestens einem der Ansprüche 8 bis 11.

13. Verwendung einer Folie gemäß Anspruch 12 zur Herstellung von Verbundsicherheitsgläsern.

14. Beschichtung enthaltend eine Formmasse gemäß mindestens einem der Ansprüche 8 bis 11.

15. Verwendung einer Formmasse gemäß mindestens einem der Ansprüche 8 bis 11 zur Herstellung ionenleitfähiger Zwischenschichten für elektrochrome Systeme.

## Claims

1. A crosslinked polyvinyl acetal, **characterized in that** it is obtainable from at least one polyvinyl acetal (I)
which is obtainable by reacting at least one polymer (A) comprising
a.) 1.0 to 99.9 % by weight of structural units of formula (1) 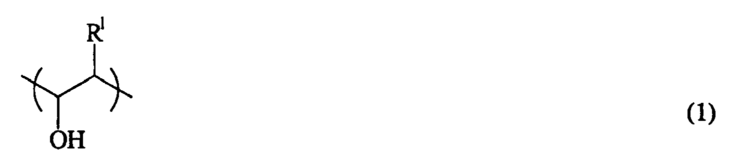 wherein R¹ means hydrogen or methyl,
b.) 0 to 99.0 % by weight of structural units of formula (2) 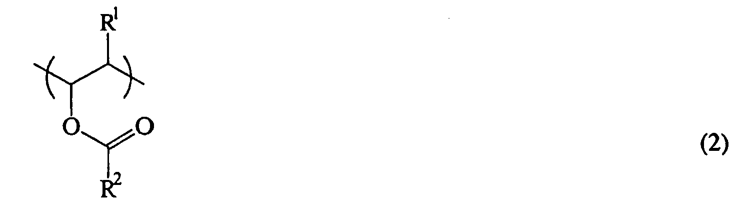 wherein R² represents hydrogen or an alkyl radical having 1 to 6 carbon atoms,
c.) 0 to 70.0 % by weight of structural units of formula (3) 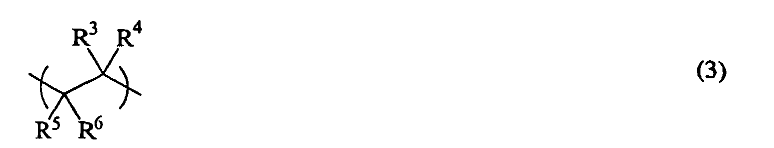 wherein R³, R⁴, R⁵, and R⁶ are each independently of one another radicals having a molecular weight in the range of 1 to 500 g/mol,
d.) 0.0001 to 30.0 % by weight of structural units of formula (4) 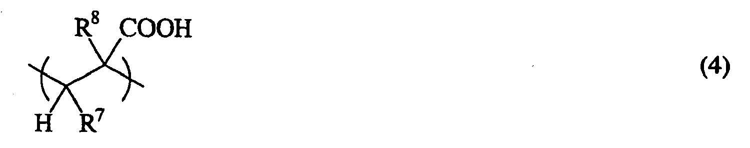 wherein R⁷ and R⁸ each represent independently of one another hydrogen, a carboxyl group, or an alkyl group having 1 to 10 carbon atoms that may optionally have one or more COOH groups as substituents,
each based on the total weight of polymer (A), with at least one compound (B) of formula (5) 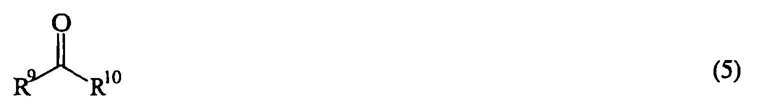 wherein R⁹ und R¹⁰ are each independently of one another hydrogen, COOH, an alkyl group having 1 to 10 carbon atoms, or an optionally substituted aryl group having 6 to 12 carbon atoms,
by at least partially esterifying groups of formula (1) and formula (4) with one another.

2. A polyvinyl acetal according to claim 1, **characterized in that** its total content of esterified and non-esterified carboxyl groups is in the range of 0.001 to 10.0 % by weight, based on the total weight of the polyvinyl acetal.

3. A polyvinyl acetal according to claim 2, **characterized in that** its total content of esterified and non-esterified carboxyl groups is in the range of 0.01 to 5.0 % by weight, based on the total weight of the polyvinyl acetal.

4. A polyvinyl acetal according to claim 3, **characterized in that** its total content of esterified and non-esterified carboxyl groups is in the range of 0.01 to 2.0 % by weight, based on the total weight of the polyvinyl acetal.

5. A polyvinyl acetal according to at least one of the previous claims, **characterized in that** it contains a plasticizer.

6. A method for producing a polyvinyl acetal according to at least one of the previous claims, **characterized in that** at least one polyvinyl acetal (I), optionally together with at least one plasticizer, is thermally crosslinked at stock temperatures of 120 to 280 °C.

7. A method according to claim 6, **characterized in that** the thermal crosslinking is carried out in an extruder, kneading unit, or another heatable unit.

8. A molding compound comprising a polyvinyl acetal according to at least one of claims 1 to 5.

9. A molding compound according to claim 8 further comprising a polyvinyl acetal having a weight average molecular weight of less than 1 000 000 g/mol.

10. A molding compound according to claim 9, **characterized in that** the polyvinyl acetal having a weight average molecular weight of less than 10 000 000 g/mol is obtainable by reacting at least one polymer (A') comprising
a.) 1.0 to 99.9 % by weight of structural units of formula (1) 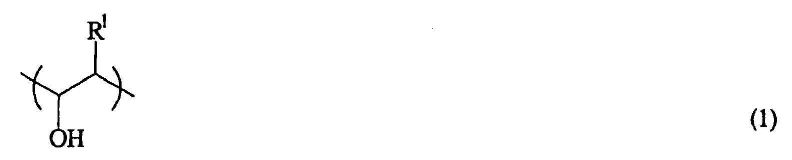 wherein R¹ means hydrogen or methyl,
b.) 0 to 99.0 % by weight of structural units of formula (2) 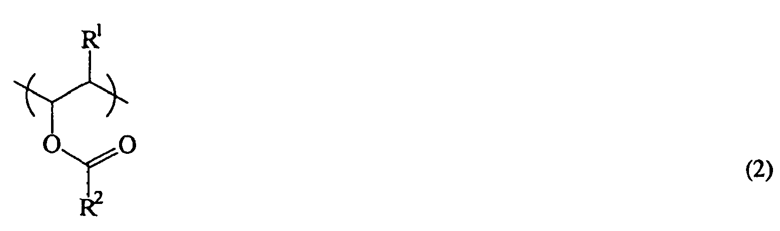 wherein R² represents hydrogen or an alkyl radical having 1 to 6 carbon atoms,
c.) 0 to 70.0 % by weight of structural units of formula (3) 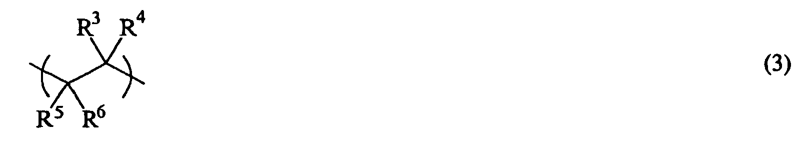 wherein R³, R⁴, R⁵, and R⁶ are each independently of one another radicals having a molecular weight in the range of 1 to 500 g/mol,
d.) less than 0.1 % by weight of structural units of formula (4) 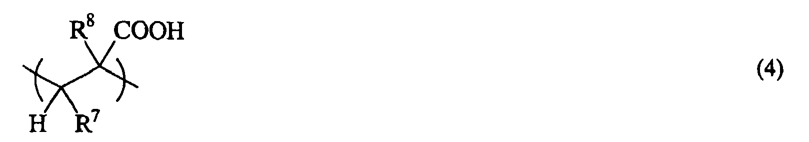 wherein R⁷ and R⁸ each represent independently of one another hydrogen, a carboxyl group, or an alkyl group having 1 to 10 carbon atoms that may optionally have one or more COOH groups as substituents,
each based on the total weight of polymer (A'), with at least one compound (B') of formula (5), 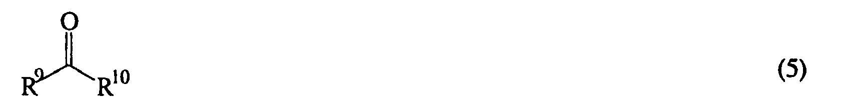 wherein R⁹ und R¹⁰ are each independently of one another hydrogen, COOH, an alkyl group having 1 to 10 carbon atoms, or an optionally substituted aryl group having 6 to 12 carbon atoms.

11. A molding compound according to at least one of claims 9 or 10, **characterized in that** the crosslinked polyvinyl acetal and the polyvinyl acetal with a weight average molecular weight of less than 10 000 000 g/mol are present in a weight ratio in the range of 1 : 10 to 10 : 1.

12. A film comprising a molding compound according to at least one of claims 8 to 11.

13. Use of a film according to claim 12 for the production of laminated safety glass.

14. A coating comprising a molding compound according to at least one of claims 8 to 11.

15. Use of a molding compound according to at least one of claims 8 to 11 for the production of ionically conductive intermediate layers for electrochromic systems.

## Revendications

1. Acétal de polyvinyle réticulé, **caractérisé en ce qu'**il est obtenable à partir d'au moins un acétal de polyvinyle (I)
qui peut être obtenu par réaction d'au moins un polymère contenant
a.) 1,0 à 99,9 % en poids d'unités structurelles de formule (1) 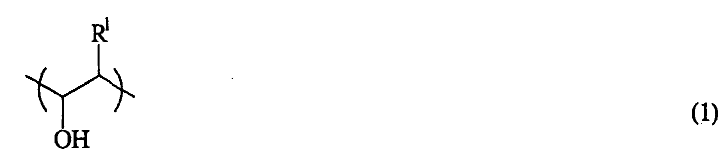 dans laquelle R¹ représente hydrogène ou méthyle
b.) 0 à 99,0 % en poids d'unités structurelles de formule (2) 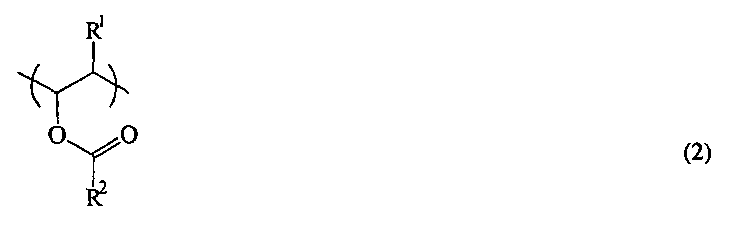 dans laquelle R² représente hydrogène ou un groupe alkyle comportant 1 à 6 atomes de carbone,
c.) 0 à 70,0 % en poids d'unités structurelles de formule (3) 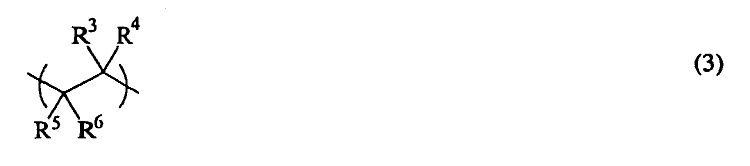 dans laquelle R³, R⁴, R⁵ et R⁶ représentent, indépendamment les uns des autres, des groupes ayant une masse moléculaire comprise entre 1 et 500 g/mol,
d.) 0,0001 à 30,0 % en poids d'unités structurelles de formule (4) 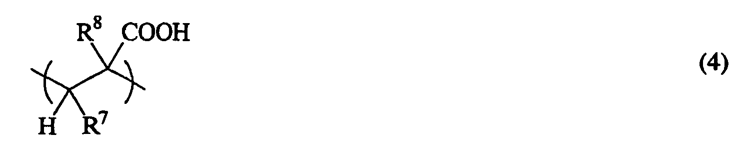 dans laquelle R⁷ et R⁸ représentent, indépendamment les uns des autres, hydrogène, un groupe carboxyle ou bien un groupe alkyle comportant 1 à 10 atomes de carbone et étant pourvu, le cas échéant, d'un ou de plusieurs groupes -COOH comme substituants,
les pourcentages ci-dessus se rapportant au poids total dudit polymère (A),
avec au moins un composé (B) de formule (5) 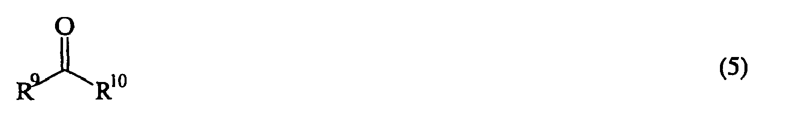 dans laquelle R⁹ et R¹⁰ représentent, indépendamment les uns des autres, hydrogène, COOH, un groupe alkyle comportant 1 à 10 atomes de carbone ou bien, le cas échéant, un groupe aryle substitué comportant 6 à 12 atomes de carbone,
en reliant, au moins partiellement, des groupes de formule (1) et de formule (4) par estérification.

2. Acétal de polyvinyle selon la revendication 1, **caractérisé en ce que** sa teneur globale en groupes carboxyle estérifiés ou non-estérifiés est comprise entre 0,001 et 10,0 % en poids, exprimée par rapport au poids total de l'acétal de polyvinyle.

3. Acétal de polyvinyle selon la revendication 2, **caractérisé en ce que** sa teneur globale en groupes carboxyle estérifiés ou non-estérifiés est comprise entre 0,01 et 5,0 % en poids, exprimée par rapport au poids total de l'acétal de polyvinyle.

4. Acétal de polyvinyle selon la revendication 3, **caractérisé en ce que** sa teneur globale en groupes carboxyle estérifiés ou non-estérifiés est comprise entre 0,01 et 2,0 % en poids, exprimée par rapport au poids total de l'acétal de polyvinyle.

5. Acétal de polyvinyle selon au moins une des revendications précédentes, **caractérisé en ce qu'**il contient des plastifiants.

6. Procédé de fabrication d'un acétal de polyvinyle selon au moins une des revendications précédentes, **caractérisé en ce qu'**au moins un acétal de polyvinyle (I), le cas échéant associé à au moins un plastifiant, est soumis à une réticulation thermique réalisée alors que la température de la matière est comprise entre 120 et 280 °C.

7. Procédé selon la revendication 6, **caractérisé en ce que** la réticulation thermique est réalisée dans une extrudeuse, dans un malaxeur ou dans un autre dispositif pouvant être chauffé.

8. Matière moulable, contenant un acétal de polyvinyle selon au moins une des revendications 1 à 5.

9. Matière moulable selon la revendication 8 contenant, en outre, un acétal de polyvinyle ayant une masse moléculaire moyenne en poids qui est inférieure à 1.000.000 g/mol.

10. Matière moulable selon la revendication 9, **caractérisé en ce que** l'acétal de polyvinyle ayant une masse moléculaire moyenne en poids inférieure à 10.000.000 g/mol peut être obtenu par réaction d'au moins un polymère (A') contenant
a.) 1,0 à 99,9 % en poids d'unités structurelles de formule (1) 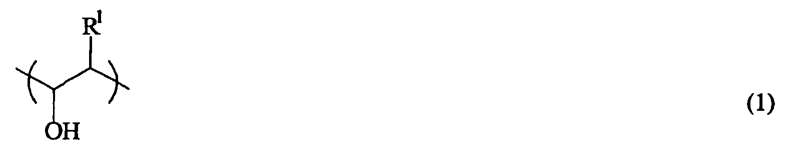 dans laquelle R¹ représente hydrogène ou méthyle
b.) 0 à 99,0 % en poids d'unités structurelles de formule (2) 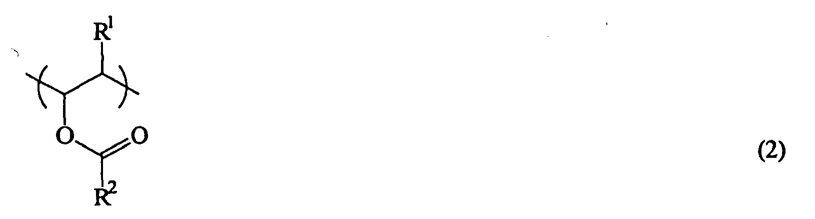 dans laquelle R² représente hydrogène ou un groupe alkyle comportant 1 à 6 atomes de carbone,
c.) 0 à 70,0 % en poids d'unités structurelles de formule (3) 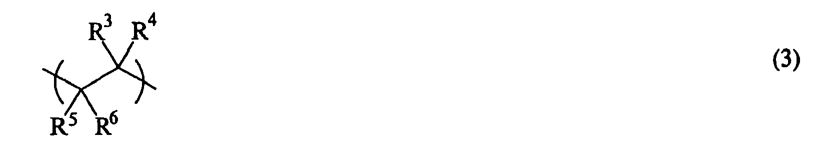 dans laquelle R³, R⁴, R⁵ et R⁶ représentent indépendamment les uns des autres des groupes ayant une masse moléculaire comprise entre 1 et 500 g/mol,
d.) moins de 0,1 % en poids d'unités structurelles de formule (4) 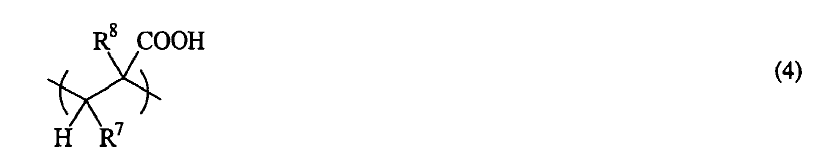 dans laquelle R⁷ et R⁸ représentent, indépendamment les uns des autres, hydrogène, un groupe carboxyle ou bien un groupe alkyle comportant 1 à 10 atomes de carbone et étant pourvu, le cas échéant, d'un ou de plusieurs groupes -COOH comme substituants,
les pourcentages ci-dessus se rapportant au poids total dudit polymère (A'),
avec au moins un composé (B') de formule (5) 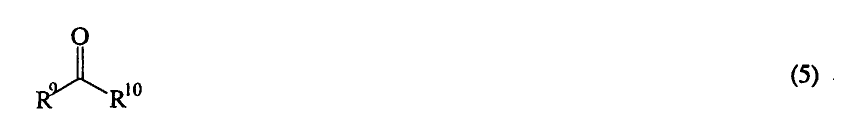 dans laquelle R⁹ et R¹⁰ représentent, indépendamment les uns des autres, hydrogène, COOH, un groupe alkyle comportant 1 à 10 atomes de carbone ou bien, le cas échéant, un groupe aryle substitué comportant 6 à 12 atomes de carbone.

11. Matière moulable selon au moins une des revendication 9 ou 10, **caractérisé en ce que** l'acétal de polyvinyle réticulé et l'acétal de polyvinyle ayant une masse moléculaire moyenne en poids inférieure à 10.000.000 g/mol sont présents dans rapport de poids compris entre 1 : 10 et 10 : 1.

12. Feuille contenant une matière moulable selon au moins une des revendications 8 à 11.

13. Utilisation d'une feuille selon la revendication 12 pour fabriquer du verre de sécurité feuilleté.

14. Revêtement contenant une matière moulable selon au moins une des revendications 8 à 11.

15. Utilisation d'une matière moulable selon au moins une des revendications 8 à 11 pour fabriquer des couches intermédiaires conductrices d'ions destinées à des systèmes électrochromes.
